# EUROPEAN PATENT APPLICATION

(11) **EP 0 596 704 A1**
(43) Date of publication of application: **11.05.1994**
(21) Application number: 93308756.1
(22) Date of filing: 02.11.1993
(51) Int. Cl.: C08L 55/02, C08L 25/12, C08L 67/04, C08L 71/03

(54) **Electrostatic dissipative polymer blends**

(30) Priority: 04.11.1992 US 971487
(71) Applicant: GENERAL ELECTRIC COMPANY, Schenectady, NY 12345 (US)
(72) Inventor: Giles, Brett Stephen, Mount Vernon, Indiana 47620 (US); Vilasagar, Shripathy, Parkersburg, West Virginia 26101 (US)
(74) Representative: Pratt, Richard Wilson

(57) **Abstract**

Antistatic blends are provided comprising a styrenic polymer, an epihalohydrin copolymer and a polyalkylenelactone. The blends exhibit static dissipative properties and enhanced tensile elongation and static dissipation rates. The blends are useful for making molded articles.

## Description

The present invention relates to polymer blend compositions exhibiting good antistatic properties and improved ductility. More particularly, the present invention relates to polymer blend compositions comprising a styrenic polymer, an epihalohydrin-oxirane copolymer and a polyalkylene lactone.

### DESCRIPTION OF THE RELATED ART

Compositions containing styrenic polymers such as ABS are widely used owing to the high impact strength, tensile strength and hardness and the thermoplastic properties of styrenic polymers. However, many compositions containing styrenic polymers exhibit no electrostatic charge dissipation which make the compositions unacceptable for uses wherein rapid dissipation of static electrical charges is required.

Various means have been developed for reducing electrostatic charge retention in polymer compositions. According to one method, an article molded from a polymer composition may be coated with an antistatic film coating material. According to another method, static charge retention in a polymer composition may be reduced by incorporating a material having antistatic properties into the polymer composition. For example, the Puletti et al U.S. Pat. No. 3,425,981 discloses polymer compositions including homopolymers and copolymers of ethylene oxide to reduce static charge retention and the Ebneth et al U.S. Pat. No. 3,450,794 discloses polymer compositions including polypropylene glycol. The Tanaka et al U.S. Pat. No. 4,543,390 discloses antistatic polymer compositions including super fine particle polymers comprising graft copolymers of polyalkylene oxide and at least one vinyl monomer.

The Federl et al U.S. Pat. No. 4,588,773 discloses an improved antistatic polymer composition comprising less than 80% by weight of an ABS graft copolymer and more than 20% by weight of an epihalohydrin copolymer. The polymer compositions disclosed by Federl et al exhibit charged decay rates from 5,000 volts to 0 volts of less than about 2 seconds. The ability of these compositions to rapidly dissipate static electrical charge makes these polymer compositions particularly advantageous for use in many applications. However, the delamination tendencies and low tensile elongation properties of the polymer compositions disclosed by Federl et al are somewhat inferior to other polymer compositions containing ABS polymers, therefore limiting the use of these compositions in various applications.

It is therefore an object of the present invention to provide polymer blend compositions which exhibit good antistatic properties with reduced delamination and improved ductility as indicated by tensile elongation. Specifically, it is an object of the present invention to provide polymer blend compositions which exhibit rapid dissipation of static electrical charges and improved ductility and reduced delamination tendencies exhibited by increased tensile elongation before breaking.

### SUMMARY OF THE INVENTION

Polymer blend compositions comprise a styrenic polymer, an epihalohydrin copolymer and polyalkylenelactone: wherein the polyalkylenelactone is included in the polymer blend compositions in an amount sufficient to increase the compatibility of the epihalohydrin-oxirane copolymer and the styrenic polymer as compared with a blend of the styrenic polymer and the epihalohydrin copolymer not including the polyalkylenelactone polymer; and wherein the increase in compatibility is evidenced in part by an increase in ductility as demonstrated by tensile elongation and increased rates of electrostatic dissipation. More preferably, the polymer blend compositions according to the present invention which exhibit good antistatic properties and improved ductility comprise from about 40 to about 96% by weight of a styrenic polymer, from about 2 to about 50% by weight of an epihalohydrin-oxirane copolymer, and from about 2 to about 50% by weight of a polyalkylenelactone such as polycaprolactone polymer. In a more preferred embodiment, the compositions include from about 55 to about 92 percent by weight of a styrenic polymer, from about 5 to about 25 percent by weight of an epihalohydrin-oxirane copolymer and from about 3 to about 25 percent by weight of polycaprolactone polymer.

These and additional advantages of the polymer blend compositions according to the present invention will be more fully understood in view of the following detailed description.

### DETAILED DESCRIPTION

The polymer blend compositions of the invention comprise a styrenic polymer, an epihalohydrin-oxirane copolymer and a polycaprolactone polymer. The caprolactone polymer is included in the polymer blend compositions in an amount sufficient to increase the tensile elongation of a blend of the epihalohydrin-oxirane copolymer and the styrenic polymer as compared with a blend of the styrenic polymer and the epihalohydrin-oxirane copolymer not including the caprolactone polymer.

In order that the polymer blend compositions exhibit the high impact strength and hardness and thermoplastic properties generally associated with styrenic polymers, it is preferred that the styrenic polymer is included in the polymer blend compositions of the present invention in an amount of from about 40 to about 96% by weight. Additionally, in order to provide the polymer blend compositions of the invention with antistatic properties and the ability to quickly dissipate static electrical charges, it is preferred that the epihalohydrin-oxirane copolymer is included in an amount of from about 2 to about 50% by weight. Additionally, in order that the polymer blend compositions of the invention exhibit improved tensile elongation, it is preferred that the polycaprolactone polymer be included in the compositions, preferably in an amount of from about 2 to about 50% by weight. In a more preferred embodiment, the polymer blend compositions of the invention include from about 55 to about 92% by weight of the styrenic polymer, from about 3 to about 25% by weight of the epihalohydrin-oxirane copolymer and from about 3 to about 25% by weight of the polycaprolactone polymer. The amounts of each component included in the polymer blend compositions of the invention are selected to add up to 100 weight percent.

The styrenic polymers which are useful for the purposes of this invention are polymers and copolymers of styrene and include both the rigid resins and the resins commonly designated as high-impact styrenic resins. The high impact resins are generally prepared by the graft polymerization of mixtures of styrene and optionally one or more additional copolymerizable vinyl monomers in the presence of a rubbery polymeric substrate. Analogous resins may also be produced by blending a rigid matrix polymer with a grafted rubbery substrate, such as a high rubber graft. Generally, high rubber grafts contain a high percentage of rubbers, for example 30 or more weight percent, preferably 40 or more weight percent, and are known in the art. Comonomers which may be employed in mixtures with styrene for the preparation of rigid styrene copolymers as well as for use as grafting monomers include monomers selected from the group alpha-methylstyrene, halostyrenes, vinyl alkyl-benzenes such as vinyl toluene, vinylxylene, butylstyrene and the like, acrylonitrile, methacrylonitrile, the lower alkyl esters of (meth)acrylic acid and mixtures thereof. In the high-impact styrenic resins, the rubbery polymeric substrate will usually comprise from 5 to 80%, preferably from 5 to 50% of the total weight of the graft polymer and will include rubbery polymers selected from the group consisting of polybutadiene, polyisoprene, rubbery styrene-diene copolymers, acrylic rubber, nitrile rubber and olefin rubbers such as EPDM and EPR. Additionally, other styrenic polymers known in the art may be used in the blend compositions of the invention.

Specific examples of styrenic graft polymers which may be usefully modified for the purpose of this invention are the acrylonitrile-butadiene-styrene graft polymer resins (ABS), methylmethacrylate-butadiene-acrylonitrile-styrene (MBAS) resins, styrene-butadiene graft polymer resins (HIPS), and methylmethacrylate-butadiene-styrene resins (MBS). Specific examples of styrene polymers which may be usefully modified for the purpose of this invention include polystyrene and copolymers of styrene such as styrene-acrylonitrile (SAN) copolymers, styrene-methacrylate ester copolymers, styrene-acrylonitrile-maleic anhydride terpolymer resins (SAMA), styrene-maleic anhydride copolymer resins (SMA), similar polymers containing N-phenyl and other substituted maleimides and the like, and mixtures thereof. Additionally, the analogous copolymer resins wherein a portion of the styrene monomer component is replaced with other styrenic monomers such as alpha-methyl-styrene, halogenated styrenes or vinyl toluene may also be used. Blends of styrenic polymers and one or more of polyphenylene ethers, polyvinyl chloride polymers, polyamides, polycarbonates and other polymers generally known in the art for blending with styrenic polymers may also be used. These additional polymers are generally known in the art and are disclosed in Modern Plastics Encyclopedia, 1986-1987 McGraw-Hill Inc., New York, New York.

The epihalohydrin-oxirane copolymer is included in the polymer blend compositions of the present invention in order to provide the compositions with good antistatic properties. The epihalohydrin may be copolymerized with any of a variety of known, copolymerizable monomers which have an oxirane group. Such oxirane monomers include glycidyl ethers, monoepoxides of dienes and polyenes, glycidyl esters and alkylene oxides. Examples of such monomers include vinyl glycidyl ether, isopropenyl glycidyl ether, butadiene monoxide, chloroprene monoxide, 3,4-epoxy-1-pentene, glycidyl acrylate, glycidyl methacrylate, 1,2-epoxy-3,3,3-trichloropropane, phenyl glycidyl ether, ethylene oxide, propylene oxide and trichlorobutylene oxide.

Preferably, the oxirane monomer is an alkylene oxide such as ethylene oxide, propylene oxide, butylene oxide, 3,4-epoxy- 1-pentene, 1,2-epoxy-3,3,3-trichloropropane, trichlorobutylene oxide and the like. More preferably, the alkylene oxide is ethylene oxide, propylene oxide or mixtures thereof. Ethylene oxide is most preferred.

In a preferred embodiment, the epihalohydrin and the alkylene oxide are copolymerized to form a epihalohydrin-oxirane rubber prior to combination with the styrenic polymer. Suitable epihalohydrin-oxirane copolymers are available commercially or may be prepared from known, commercially available monomers using known techniques. Generally, the epihalohydrin-oxirane copolymer may include about 2% to about 98% by weight epihalohydrin, and about 98% to about 2% by weight of another monomer. More preferably, however, the copolymer includes about 5% to about 50% by weight epihalohydrin and about 95% to about 50% by weight of another monomer, which is preferably an alkylene oxide. In a most preferred embodiment the copolymer comprises from about 10 to about 40 percent by weight of an epihalohydrin and about 90 to about 60 percent by weight of another monomer.

The polyalkylenelactones that are used in the present invention are the polymerization product of cyclic ester monomers of the formula: 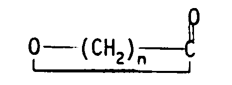
where n is preferably 4-6.

Polyalkylenelactones are prepared from the above lactones, through an addition type reaction. The cyclic ester monomer opens in the presence of an initiator that contains an active hydrogen atom. The resulting polymer is considered to be formed by a heterocyclic polymerization. While the polymerization will proceed without a catalyst, catalysts such as stannous octoate greatly facilitate the reaction. When a diol is used as the initiator, a dihydroxy-terminated polymer is formed. If water is used as the initiator, the resulting polymer is terminated with both carboxyl and hydroxyl functionality. Branched polymers can be prepared by using triols, tetraols, etc. as initiators. Preferably the polyalkylenelactones have a molecular weight of from 4000 to 45,000.

The various polyalkylenelactones used in the present invention include, for example, polyvalerolactone, polycaprolactone and polycapryllactone. Particularly preferred is poly(ε-caprolactone).

Poly(ε-caprolactone) is a partially crystalline polymer that has a melting point of around 60°C. It is available from Union Carbide Corporation, Danbury, Conn., U.S.A., in three molecular weight grades. One grade, PCL-700, has a molecular weight of about 40,000. The others, PCL-300 and PCL-150, have molecular weights of about 10,000 and 5,000 respectively.

The blend compositions of the invention may be prepared by combining the styrene polymer, the epihalohydrin-oxirane copolymer and the polyalkylenelactone in any of the conventional blending methods known in the art. For example, the polymers may be combined to form the blend compositions by melt mixing the polymer ingredients in a Banbury mixer, extruder or on a mill. Other known additives, such as impact modifiers, pigments, lubricants, stabilizers, fillers, flame retardants, foaming agents and antioxidants may also be included in the polymer blend compositions.

The following examples are provided in order to illustrate several polymer blend compositions according to the present invention.

### EXAMPLES:

**Table 1**

| | A | 1 | 2 |
|---|---|---|---|
| SAN 1 | 63 | 58 | 53 |
| ABS 1 | 24 | 24 | 24 |
| EO-ECH 1 | 13 | 13 | 13 |
| Poly(ε-caprolactone)1 | | 5 | 10 |
| Izod Impact (ft-lb/in) | 3.7 | 3.8 | 2.3 |
| Tensile Data: | | | |
| Strength (psi) | 4955 | 4340 | 3666 |
| Modulus (xE5 psi) | 3.21 | 3.12 | 2.92 |
| Elongation (%) | 4 | 7 | 18 |
| ESD Data: | | | |
| +10% (seconds) | 0.05 | 0.02 | 0.02 |
| + 0% (seconds) | 0.37 | 0.14 | 0.08 |
| -10% (seconds) | 0.05 | 0.02 | 0.02 |
| -0% (seconds) | 0.42 | 0.14 | 0.09 |

SAN 1 is S/AN 72/28, MI of 3 (condition H, ASTM D1238).
ABS 1 is 50 parts PBD, 50 parts SAN (75/25 S/AN). EO-ECH1 is 80/20 ethylene oxide/epichlorohydrin copolymer, commercially avilable from BFGoodrich as Stat-Rite.
Poly(ε-caprolactone)1 is of mol.-wt. 40,000, commercially available from Union Carbide as PCL 700.
Izod impact (ft-lb/in) is measured by ASTM D256. Tensile data is determined by ASTM D638. ESD data is determined by Federal Test 101C, method 4046.

Example A is a comparative example. Examples 1 and 2 illustrate the compositions of the present invention. Note the improved elongation and ESD values obtained for examples 1 and 2 over comparative example A.

Examples A, 1 and 2 each contained 1 percent by weight potassium diphenyl sulfone sulfonate (KSS), 1 weight percent ethylene bis stearamide (EBS), 0.5 weight percent Mg Stearate and 0.25 weight percent modified dibutyl tin dimaleate (Ferro 832) based on the total weight of the composition.

## Claims

1. A polymer blend composition, comprising:
(a) from about 40 to about 96 percent by weight of a styrenic polymer comprising a polymer or copolymer of styrene;
(b) from about 2 to about 50 percent by weight of an epihalohydrin-oxirane copolymer; and
(c) from about 2 to about 50 percent by weight of a polyalkylenelactone polymer selected from the group consisting of alkylenelactone homopolymers and alkylenelactone copolymers formed from greater than 50 percent by weight acrylate monomer, the amounts of each of components (a), (b) and (c) of the blend adding up to 100 weight percent.

2. A polymer blend composition as defined by claim 1, comprising:
(a) from about 55 to about 92 percent by weight of the styrenic polymer;
(b) from about 5 to about 25 percent by weight of the epihalohydrin-oxirane copolymer; and
(c) from about 3 to about 25 percent by weight of the alkylenelactone polymer.

3. A polymer blend composition as defined by claim 1, wherein the styrenic polymer comprises an ABS graft copolymer.

4. A polymer blend composition as defined by claim 3, wherein the ABS polymer comprises a copolymer of acrylonitrile and a styrene monomer graft polymerized onto a rubber substrate.

5. A polymer blend composition as defined by claim 1, wherein the styrenic polymer comprises a high impact polystyrene.

6. A polymer blend composition as defined by claim 1, wherein the styrenic polymer comprises a polymethylmethacrylate styrene acrylonitrile butadiene graft copolymer.

7. A polymer blend composition as defined by claim 1, wherein the styrenic polymer comprises a blend of a polystyrene and polyphenylene ether.

8. A polymer blend composition as defined by claim 1, wherein the styrenic polymer comprises a high rubber graft polymer and at least one polymer selected from styrene-acrylonitrile-maleic anhydride polymers, styrene-acrylonitrile polymers, styrene methyl methacrylate polymers, and styrene-maleic anhydride polymers.

9. A polymer blend composition as defined by claim 1, wherein the epihalohydrin-oxirane copolymer comprises a copolymer of epihalohydrin and an alkylene oxide.

10. A polymer blend composition as defined by claim 9, wherein the alkylene oxide is selected from the group consisting of ethylene oxide, propylene oxide, and mixtures thereof.

11. A polymer blend composition as defined by claim 9, wherein the epihalohydrin-oxirane copolymer comprises a copolymer of epichlorohydrin and ethylene oxide.

12. A polymer blend composition as defined by claim 11, wherein the epihalohydrin-oxirane copolymer comprises 10-40 weight percent epichlorohydrin and 90-60 weight percent ethylene oxide.

13. A polymer blend composition as defined by claim 1, wherein the alkylenelactone polymer comprises an alkylenelactone homopolymer.

14. A polymer blend composition as defined by claim 13, wherein the alkylenelactone homopolymer is selected from the group consisting of poly(caprolactones).

15. A polymer blend composition as defined by claim 14, wherein the alkylenelactone homopolymer is a homopoly(ε-caprolactone).

16. A polymer blend composition as defined by claim 1, wherein the alkylenelactone polymer comprises an alkylenelactone copolymer formed from greater than 50 percent by weight ε-caprolactone monomer.

17. A polymer blend composition as defined by claim 1, comprising:
(a) from about 55 to about 92 percent by weight of an ABS polymer comprising a graft copolymer;
(b) from about 5 to about 25 percent by weight of a copolymer of epichlorohydrin and ethylene oxide; and
(c) from about 3 to about 25 percent by weight poly(ε-caprolactone).
